# EUROPEAN PATENT APPLICATION

(11) **EP 3 343 499 A1**
(43) Date of publication of application: **04.07.2018**
(21) Application number: 16382655.5
(22) Date of filing: 27.12.2016
(51) Int. Cl.: G06Q 90/00, G08B 13/194, G07C 9/00

(54) **SECURITY PROCESS AND SECURITY TOWER CONTROLLING COMING VEHICLES AT CHECKPOINT**

(71) Applicant: Atos IT Solutions and Services Iberia, S.L., 28760 Tres Cantos - Madrid (ES)
(72) Inventor: CASATEJADA HERRERA, Pedro, E-28019 Madrid (ES)
(74) Representative: Vigand, Régis Louis Michel

(57) **Abstract**

This invention relates to a security process, performing real time checking on vehicle coming at checkpoint, comprising: a collection phase (1, 2, 3) performed in checkpoint vicinity, an analysis phase (4, 5, 6, 7), including a step of assessing (7) similarity or not between a catalog of predetermined risk situations and coming vehicle global situation aggregating together collected vehicle and person and mobile phone information, a result phase (8) including triggering an alert being representative of at least one of alert triggering motive(s) having triggered this alert, a decision phase (9) transmitting said triggered alert to a human being in charge of security at checkpoint who will decide to stop or not said coming vehicle at checkpoint, based on said triggered alert.

## Description

### FIELD OF THE INVENTION

The invention relates to the field of security processes, performing real time checking on vehicle coming at checkpoint, and of security towers implementing such security processes. Vehicles can be for instance cars or trucks or bikes, or more generally any vehicle moving on the roads accessing checkpoints.

### BACKGROUND OF THE INVENTION

When vehicles come at checkpoint, these coming vehicles are very numerous as compared to the available human beings in charge of security at this checkpoint, and the huge majority of them do not present any risk security.

However, either the human beings in charge of security at checkpoint do control, at least lightly, all vehicles, and they will be outnumbered, or they choose to skip most of them at first sight, and they are at risk of by-passing a potentially dangerous vehicle.

To help the human beings in charge of security at checkpoint, for example the border guards, there are automated security processes which filter coming vehicles, indeed perform a first filtering, so as to focus on coming vehicles either presenting a risk or at least presenting a non-negligible probability of risk, therefore forwarding an alert to human beings in charge of security at checkpoint for these risky vehicles, letting the human beings in charge of security at checkpoint either to perform a manual second more specific filtering over these risky vehicles or controlling exhaustively at least some of these risky vehicles.

These automated security processes will consider a big majority of these vehicles as not risky, thereby triggering no alert, even if the human beings in charge of security at checkpoint may still decide to control a little part of such supposed non-risky vehicles.

Security processes automatically perform real time checking on vehicle coming at checkpoint in order to quickly detect some risk or at least some risk indices, helping the human being in charge of security at checkpoint by providing for a first automatic filter to help the human beings in charge of security at checkpoint to focus their rare real control operations on coming vehicles having a higher probability of presenting risk, thanks to this first automatic filter offered by the security processes.

In order to be very helpful, these security processes should automatically identify as many as possible of risky coming vehicles.

According to a prior art, there exist some automatic security processes which are based on either vehicle information collection or person information collection, or are based on a combination of both vehicle information collection and person information collection. This prior art is however limited in its effectiveness.

According to the invention, it would be useful to collect additional available information and to correlate this additional information with already collected vehicle information collection and person information collection. This means that these security processes should be more efficient while remaining automatic and real time.

Indeed, it would be interesting to get threat identification at check points which are quick, pleasant and non-intrusive for vehicle passengers while becoming more efficient, by efficiently collecting as much information as possible about the vehicle and/or persons going through the checkpoint.

Therefore, by collecting information from multiple sources about the situation at the checkpoint, additional threats can be detected and better evaluated providing a significant improvement in overall situational awareness and decision making about coming vehicles at checkpoint.

### SUMMARY OF THE INVENTION

The object of the present invention is to alleviate at least partly the above mentioned drawbacks.

More particularly, the invention aims to provide for collection of at least a third category of available information which is mobile phone information, and by aggregating this mobile phone information about coming vehicle to both collected vehicle information and person information, thereby enabling improvement on checkpoint threat identification by data collection and correlation about person, vehicle and communication intelligence altogether.

The present invention relates to a solution collecting and analyzing person, vehicle and communication information at access points in the vicinity of checkpoint or at checkpoint itself.

Mobile phone information analysis would be helpful already by itself, to improve checkpoint threat detection, but it is all the more helpful that this mobile phone information is aggregated to vehicle information and person information, which means mobile phone information is analyzed in relation to vehicle information and/or in relation to person information, what strongly increases its added efficiency to help detecting risky vehicles, to help detecting coming vehicles presenting a threat.

Vehicle information and person information and mobile phone information, especially when aggregated together present a synergistic effect, because the encompassed risky coming vehicles that can be automatically filtered by security processes and focused on as "potentially dangerous", are much more numerous with the help of this specific mobile phone information, because the corresponding scenarios, combining all these three types of collected information, vehicle, person and mobile phone information, are much richer and much more numerous.

Combining mobile phone information on the one hand and vehicle and person information on the other hand is not innate, since the field of telecommunication on one side and the field of image recognition and image processing on the other side are usually unrelated technology fields.

This object is achieved with a security process, performing real time checking on vehicle coming at checkpoint, comprising: a collection phase performed in checkpoint vicinity, including: a step of collecting vehicle information about coming vehicle, a step of collecting person information about person(s) located in coming vehicle, a step of collecting mobile phone information about mobile phone(s) located in coming vehicle, an analysis phase including: a step of comparing collected vehicle information to a predetermined vehicle blacklist, a step of comparing collected person information to a predetermined person blacklist, a step of comparing collected mobile phone information to a predetermined mobile phone blacklist, a step of assessing similarity or not between a catalog of predetermined risk situations and coming vehicle global situation aggregating together collected vehicle and person and mobile phone information, a result phase including triggering an alert: either if at least one of comparison steps is positive, or if said vehicle global situation is assessed similar to at least one of said risk situations of said catalog, said triggered alert being representative of at least one of alert triggering motive(s) having triggered this alert, a decision phase transmitting said triggered alert to a human being in charge of security at checkpoint who will decide to stop or not said coming vehicle at checkpoint, based on said triggered alert.

This object is also achieved with a security tower implementing security process according to the invention, wherein it comprises: cameras to perform said vehicle information collecting step and said person information collecting step, a processor to perform said analysis phase and said result phase, n actuator to actuate a mechanical system which blocks or frees at least a vehicle circulation lane and which is driven by said processor based on said result phase.

This object is also achieved with a security system implementing at least one tower according to the invention, one said tower for each vehicle circulation lane at checkpoint. Thus, one tower per lane meets the maximal security criterion, for a reasonable cost.

This object is also achieved with a security system implementing at least one tower according to the invention, one said tower for each pair of vehicle circulation lanes at checkpoint, vehicles circulating in the same direction on both lanes of said pair of vehicle circulation lanes. Thus, one tower per pair of lanes meets a very good security criterion, for a reduced cost.

According to embodiments of the invention, different information collection improves situation awareness, information correlation supports additional threat identification which would otherwise not be possible, communication intelligence information, and its aggregation to already available other vehicle and person information, enables detection of threats which would previously go undetected.

According to embodiments of the invention, this threat detection efficiency improvement is obtained within integrated security process and associated security tower, which provide for a quick and easy way to be deployed at checkpoints.

Preferred embodiments comprise one or more of the following features, which can be taken separately or together, either in partial combination or in full combination, with any of previous objects of the invention.

Preferably, said triggered alert is representative of only one alert triggering motive considered as most important alert triggering motive according to a ranking of potential alert triggering motives. Thus, the triggered alert is simpler to analyze by the human being in charge of security at checkpoint.

Preferably, said triggered alert is representative of all alert triggering motive(s) or at least of multiple alert triggering motive(s). Thus, the triggered alert is richer and allows for deeper subsequent analysis from the human being in charge of security at checkpoint.

Preferably, available data about a coming vehicle, including vehicle information and/or person information and/or mobile phone information, which are collected from different collection phases performed in vicinity of different checkpoints within a predetermined area and/or at different times within a predetermined duration, are gathered together in a batch of information about said coming vehicle, said similarity assessing step also assesses similarity or not between said catalog of predetermined risk situations and said coming vehicle batch of information, said alert is triggered also if said coming batch of information is assessed similar to at least one of said risk situations of said catalog, said triggered alert being representative of this alert triggering motive if there is no other alert triggering motive, or being preferably representative of this supplementary alert triggering motive too if there is already at least one other alert triggering motive.

Thus, the multiplying effect on efficiency detection of risky coming vehicles, i.e. of coming vehicles presenting a threat, because of much more richer scenarios encompassed through not only aggregation of data with respect to different information sources, vehicle, person and mobile phone, but also aggregation of data with respect to these different sources for different times and/or different locations (different checkpoints), is again strongly increased.

Preferably, said predetermined area is the whole border between two countries or the whole border encircling one country, and/or said duration is comprises between one day and one month. Thus, cross analysis is potentially deeply increased, but to the cost of a more complex collected data aggregating system. Here, the security criterion will be maximized, but the complexity of the whole security process will be increased.

Preferably, said vehicle information collecting step and said person information collecting step are both performed via imaging by cameras located in checkpoint vicinity. Thus, the collecting step is made simpler but remains rich of information content.

Preferably, among said cameras, at least one camera is dedicated to said vehicle information collecting step, at least one camera is dedicated to said person information collecting step, preferably two cameras are dedicated to said person information collecting step, at least one camera is dedicated to a vehicle context information collecting step collecting information about context around coming vehicle, said vehicle context information being also aggregated within said coming vehicle information. Four cameras remain a reasonable number, while allowing for getting most of images potentially useful to detect risk or threat in coming vehicles.

Preferably, said vehicle information and said person information and said mobile phone information are the only collected information. Globally, this information from three different sources is rather sufficient to detect many potential threats.

Preferably, all said collecting steps are performed in parallel to one another. Thus, rapidity is increased, at practically no cost in hardware resources.

Preferably, said collected vehicle information includes: vehicle registration plate, and/or vehicle type, and/or vehicle color, and/or vehicle make, and/or vehicle size, and/or vehicle shape. These are the main most useful vehicle information easily accessible from a coming vehicle by simply taking pictures of the coming vehicle.

Preferably, said collected person information includes: number of persons located in coming vehicle, and/or face recognition of driver of coming vehicle, and/or face recognition of all/any passengers of coming vehicle. These are the main most useful person information easily accessible from a coming vehicle by simply taking pictures of the coming vehicle.

Preferably, said collected mobile phone information includes: number of mobile phones located in coming vehicle, and/or make and/or type of mobile phones located in coming vehicle, and/or origin country of SIM (SIM meaning Subscriber Identity Module) cards and/or operator of SIM cards, of mobile phones located in coming vehicle, and/or SMS target numbers and/or SMS texts, of mobile phones located in coming vehicle, in vicinity of checkpoint, and/or target numbers of phone calls of mobile phones located in coming vehicle, in vicinity of checkpoint. These are the main most useful mobile phone information easily accessible from a coming vehicle by simply well-known and available communication interception techniques.

Preferably, said risk situations of said catalog correspond to a mismatch: between said collected vehicle information and said collected person information, and/or between said collected vehicle information and said collected mobile phone information, and/or between said collected person information and said collected mobile phone information. Those types of mismatch are the most representative of a risky coming vehicle or of a potential threat linked to the coming vehicle.

Preferably, said mobile phone information collecting step is performed via either local communication detection system located in checkpoint vicinity and/or global communication detection system. Local communication detection system located in checkpoint vicinity allows for collecting more easily information about content of communications, whereas global communication detection system allows for collecting more easily information about mobile phones (the mobile phone devices) themselves.

Preferably, the security tower comprises a local communication detection system to collect said mobile phone information. Thus the global system is more integrated and therefore easier to implement at checkpoint.

Preferably, one or more additional light sources, preferably spotlights, directed towards coming vehicle, to enhance imaging quality of said cameras. This is a simple way to improve image quality, which may reveal an important parameter, since face recognition for example, works much better with higher quality image.

Further features and advantages of the invention will appear from the following description of embodiments of the invention, given as non-limiting examples, with reference to the accompanying drawings listed hereunder.

### BRIEF DESCRIPTION OF THE DRAWINGS

Fig. 1 shows an example of a security process, according to an embodiment of the invention.
Fig. 2 shows an example of a security tower implementing a security process, according to an embodiment of the invention.

### DETAILED DESCRIPTION OF THE INVENTION

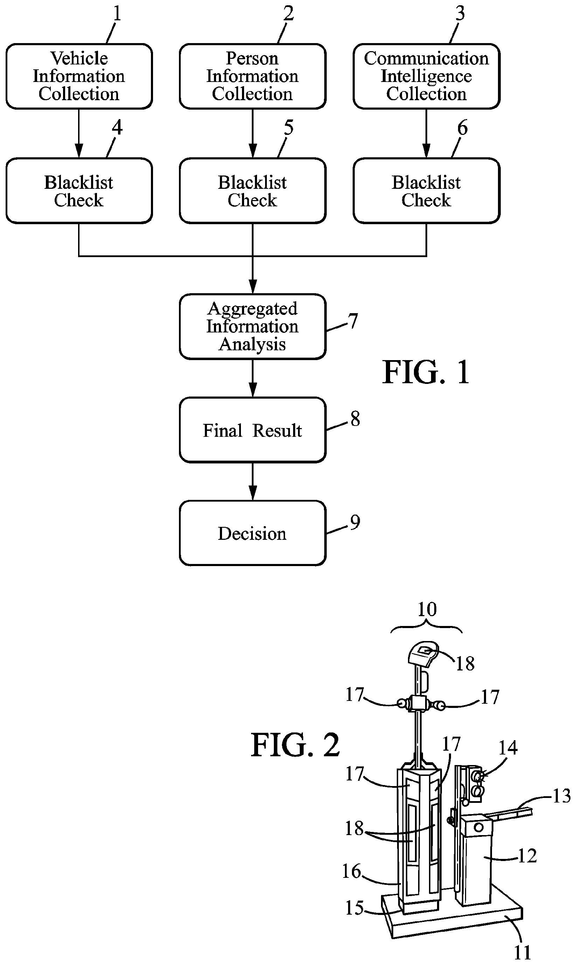

Fig. 1 shows an example of a security process, according to an embodiment of the invention.

Security process first performs three collecting steps in parallel, a vehicle information collecting step 1, a person information collecting step 2, a mobile phone information collecting step 3.

In the vehicle information collecting step 1, the collected vehicle information includes: vehicle registration plate, and vehicle type, and vehicle color, and vehicle make, and vehicle size, and vehicle shape.

In the person information collecting step 2, the collected person information includes: number of persons located in coming vehicle, and face recognition of driver of coming vehicle, and face recognition of all passengers of coming vehicle, including driver of coming vehicle.

In the mobile phone information collecting step 3, the collected mobile phone information includes: number of mobile phones located in coming vehicle, and make and type of mobile phones located in coming vehicle, and origin country of SIM cards and operator of SIM cards, of mobile phones located in coming vehicle, and SMS target numbers and SMS texts, of mobile phones located in coming vehicle, in vicinity of checkpoint, and target numbers of phone calls of mobile phones located in coming vehicle, in vicinity of checkpoint.

Security process then performs three blacklist checks in parallel, a vehicle information blacklist checking step 4, a person information blacklist checking step 5, a mobile phone information blacklist checking step 6.

In vehicle information blacklist checking step 4, if any collected piece of vehicle information or if any combination of collected pieces of vehicle information meets a corresponding vehicle item in a predetermined vehicle blacklist, then an alert will be triggered and this triggered alert will be representative, among others, of this identified vehicle item. This alert can be triggered immediately or can wait for other alert triggering motives and make this triggered alert representative of all triggering motives for this specific coming vehicle. This identified vehicle item could be for example, a specific registration plate, or the combination of a specific type of vehicle and a specific color of vehicle.

In person information blacklist checking step 5, if any collected piece of person information or if any combination of collected pieces of person information meets a corresponding person item in a predetermined person blacklist, then an alert will be triggered and this triggered alert will be representative, among others, of this identified person item. This alert can be triggered immediately or can wait for other alert triggering motives and make this triggered alert representative of all triggering motives for this specific coming vehicle. This identified person item could be for example, a specific person, or the combination of a specific driver associated with a threshold number of passengers.

In mobile phone information blacklist checking step 6, if any collected piece of mobile phone information or if any combination of collected pieces of mobile phone information meets a corresponding mobile phone item in a predetermined mobile phone blacklist, then an alert will be triggered and this triggered alert will be representative, among others, of this identified mobile phone item. This alert can be triggered immediately or can wait for other alert triggering motives and only then make this triggered alert representative of all triggering motives for this specific coming vehicle. This identified mobile phone item could be for example, a specific SIM card number, or a combination of a mobile phone type with a given country of origin of the SIM card.

In a subsequent information aggregating and analyzing step 7, when all blacklist checking step 4 to 6 have been performed, all the collected information is aggregated into a coming vehicle global situation. The presence of the absence of sufficient similarity between this coming vehicle global situation and a catalog of predetermined risk situations is assessed. These risk situations can correspond to many scenarios, some of these scenarios being given by way of example.

Now a list of possible scenarios will be given by way of example. These scenarios may be used either separately or together in partial or total combination.

In a first scenario, a single person is detected in a coming vehicle, by using facial recognition, but multiple phones are simultaneously detected. This corresponds to detection of a suspicious situation, and this triggers an alert.

In a second scenario, a cargo truck is crossing the border with multiple active mobile phones inside. This implies potential smuggling of people. This corresponds to detection of a suspicious situation, and this triggers an alert.

In a third scenario, a car with French number plates is detected, via the vehicle number plate recognition, with one or more foreign SIM card(s) inside, coming from the same foreign country listed as risky (for example because of terrorism threat). This corresponds to detection of a suspicious situation, and this triggers an alert.

In a fourth scenario, a car with French number plates is detected, via vehicle number plate recognition, with multiple SIM cards from different countries inside. This corresponds to detection of a suspicious situation, and this triggers an alert.

In a fifth scenario, the same mobile phone or the same SIM card is detected crossing the borders multiple times at different locations during the same day. This corresponds to detection of a suspicious situation, for instance a potential smuggler, and this triggers an alert.

In a sixth scenario, the same phone or the same SIM card is detected crossing border in different vehicles. This corresponds to detection of a suspicious situation, for instance a potential thief, and this triggers an alert.

In a seventh scenario, a single phone or a single SIM card is detected crossing border with multiple passengers in the car, for example with passengers changing at each crossing but with the driver remaining always the same. This corresponds to detection of a suspicious situation, for instance a potential people smuggler or "people driver", and this triggers an alert. Analysis of data from different border crossings is used to reveal further potential offenders which are not listed in the person black list, whose car is not listed in the vehicle blacklist, whose mobile phone and SIM card is not listed in the mobile phone blacklist.

In an eighth scenario, two different vehicles are detected travelling one behind the other, this detection being based on vehicle number plate information, or alternatively two different persons located in two different vehicles are detected always travelling one behind the other. This corresponds to detection of a suspicious situation, usually the first one is "clean" but is used as bait for the border guards to get busy while the second one is let go, and this triggers an alert.

In a ninth scenario, there is a video recording of a few seconds before the vehicle approached the border crossing, and it is stored and can be reviewed. Thereby, the border guard or people in charge of security at checkpoint, can observe the behavior of passengers before approaching the border: are they hiding something in the vehicle, are they throwing things out of the car, are there persons changing vehicles shortly before crossing? This corresponds to detection of a suspicious situation, and this triggers an alert. In an option, this type of video recording can be combined with face recognition.

In a tenth scenario, the vehicle type and color are detected and stored together with its number plate date at one crossing to enter the country, whereas, at another crossing the same number plate is used but the vehicle color and/or the vehicle type has changed. This corresponds to detection of a suspicious situation, for instance a stolen vehicle, and this triggers an alert. Here, one can see an important aspect which is the collection of information from multiple checkpoint locations, i.e. for instance from multiple border crossings, as well as the comparison of this information, the same number plate but different car color, and/or the same car but different persons in it, and/or the significant number of border crossings of the same person or a the same vehicle within a defined timeframe like 24 hours for example, all these cross checked distinct pieces of information, may correspond to scenarios considered as risky and therefore automatically triggering transmittal of an alert.

The final result is binary: either an alert is triggered or no alert is triggered during a result phase 8. If an alert is triggered, this alert is representative of all triggering motives. Any positive match between any collected information and any specific item within one of the predetermined blacklists in any of steps 4 to 6, will trigger an alert. Any positive match between any coming vehicle global situation and any specific predetermined risk situation within a catalog, during information aggregating and analyzing step 7, will trigger an alert.

Afterwards, in a subsequent decision phase 9, either an alert was triggered and this alert will be transmitted to the human being in charge of security at checkpoint for him or her to take a decision managing the risk or the threat, or no alert was issued and this absence of alert issuance is signaled to the human being in charge of security at checkpoint too. The final result is always triggering an alert which is sent to the fixed workplace where operator is sitting at the border or can be also sent to a remote unit using a mobile phone application.

Once the alert triggered, a human being in charge of security at checkpoint, for instance a border guard, will take over, by processing the triggered alert, and by making the final decision, to stop the "risky" coming vehicle or to let him go through the border unbothered.

Fig. 2 shows an example of a security tower implementing a security process, according to an embodiment of the invention.

On a base 11, there are both the barrier base 12 and the security tower 10 also called sentinel tower 10. The security tower 10 may be integrated with a ramp on a turnstile support. On the barrier base 12 there is this barrier 13 itself, which can be a ramp, which can be up, maintaining the lane open to vehicle circulation, or which can be down, blocking the same lane. On the barrier base 12, there is a traffic light 14 indicating whether the lane is open or closed.

On the security tower 10, there are a tower base 15, a tower managing system 16, four cameras 17, and two additional light sources 18. The tower managing system 16 included processor to perform analysis and to trigger alert, as well as actuator to command to barrier base 12 lifting or putting down this barrier 13. The two top cameras 17 are dedicated to person face recognition, whereas the two bottom cameras 17 are dedicated to number plate (registration plate) imaging and vehicle recognition for the first one, and to context recording and analysis for the second one.

Based on an eventual triggered alert by the security tower 10, the operator or the guard, will use a supervision application to block the lane or open the barrier 13 to release the vehicle in case of false alarm or an operational procedure in which they would let the suspect pass, in this last case even if an alert was triggered by the security tower 10. In case a wanted person or vehicle is detected which is supposed to be stopped at the checkpoint, the lane is kept blocked via the barrier 13 being kept in down position.

The security tower 10, as a whole, is preferably a high performance computing system, hardware and software, in order to support real time processing of the collected data, what is very advantageous in order not to introduce unnecessary waiting time at the border, at least for the main flow of non-risky vehicles.

The supervision application receiving the triggered alerts is working on a desktop personal computer for the human operator or guard and shows real time information and matches the different triggered alerts with the corresponding circulation lanes. It also offers barrier control and detailed information review on person and/or vehicle and/or mobile phone or SIM card data, as well as transmitting collected information and triggered alert to other security towers 10 at other checkpoints and to other guards or operators using mobile security applications in connection with the security tower 10. Such mobile security applications, similar to the one of the security tower 10, but running on a mobile device, may usually be used away from the checkpoint, for example some kilometers away from a border crossing, but may also be used by the guards at the border.

In an alternative embodiment, each device in charge of data collection, vehicle information collection device, person information collection device, mobile phone collection device, may be installed separately, without being integrated in an "all in one" mechanical housing.

The invention has been described with reference to preferred embodiments. However, many variations are possible within the scope of the invention.

## Claims

1. Security process, performing real time checking on vehicle coming at checkpoint, comprising:
➢ a collection phase (1, 2, 3) performed in checkpoint vicinity, including:
∘ a step of collecting vehicle information (1) about coming vehicle,
∘ a step of collecting person information (2) about person(s) located in coming vehicle,
∘ a step of collecting mobile phone information (3) about mobile phone(s) located in coming vehicle,
➢ an analysis phase (4, 5, 6, 7) including:
∘ a step of comparing (4) collected vehicle information to a predetermined vehicle blacklist,
∘ a step of comparing (5) collected person information to a predetermined person blacklist,
∘ a step of comparing (6) collected mobile phone information to a predetermined mobile phone blacklist,
∘ a step of assessing (7) similarity or not between a catalog of predetermined risk situations and coming vehicle global situation aggregating together collected vehicle and person and mobile phone information,
➢ a result phase (8) including triggering an alert:
∘ either if at least one of comparison steps (4, 5, 6) is positive,
∘ or if said vehicle global situation is assessed (7) similar to at least one of said risk situations of said catalog,
∘ said triggered alert being representative of at least one of alert triggering motive(s) having triggered this alert,
➢ a decision phase (9) transmitting said triggered alert to a human being in charge of security at checkpoint who will decide to stop or not said coming vehicle at checkpoint, based on said triggered alert.

2. Security process according to claim 1, wherein said triggered alert is representative of only one alert triggering motive considered as most important alert triggering motive according to a ranking of potential alert triggering motives.

3. Security process according to claim 1, wherein said triggered alert is representative of all alert triggering motive(s) or at least of multiple alert triggering motive(s).

4. Security process according to any of preceding claims, wherein:
➢ available data about a coming vehicle, including vehicle information and/or person information and/or mobile phone information, which are collected from different collection phases (1, 2, 3) performed in vicinity of different checkpoints within a predetermined area and/or at different times within a predetermined duration, are gathered (7) together in a batch of information about said coming vehicle,
➢ said similarity assessing step (7) also assesses similarity or not between said catalog of predetermined risk situations and said coming vehicle batch of information,
➢ said alert is triggered (8) also if said coming batch of information is assessed similar to at least one of said risk situations of said catalog, said triggered alert being representative of this alert triggering motive if there is no other alert triggering motive, or being preferably representative of this supplementary alert triggering motive too if there is already at least one other alert triggering motive.

5. Security process according to claim 4, wherein:
➢ said predetermined area is the whole border between two countries or the whole border encircling one country,
➢ and/or said duration is comprises between one day and one month.

6. Security process according to any of preceding claims, wherein said vehicle information collecting step (1) and said person information collecting step (2) are both performed via imaging by cameras located in checkpoint vicinity.

7. Security process according to claim 6, wherein, among said cameras:
➢ at least one camera is dedicated to said vehicle information collecting step (1),
➢ at least one camera is dedicated to said person information collecting step (2), preferably two cameras are dedicated to said person information collecting step (2),
➢ at least one camera is dedicated to a vehicle context information collecting step collecting information about context around coming vehicle, said vehicle context information being also aggregated within said coming vehicle information.

8. Security process according to any of preceding claims, wherein said vehicle information and said person information and said mobile phone information are the only collected information.

9. Security process according to any of preceding claims, wherein all said collecting steps (1, 2, 3) are performed in parallel to one another.

10. Security process according to any of preceding claims, wherein said collected vehicle information includes:
➢ vehicle registration plate,
➢ and/or vehicle type,
➢ and/or vehicle color,
➢ and/or vehicle make,
➢ and/or vehicle size,
➢ and/or vehicle shape.

11. Security process according to any of preceding claims, wherein said collected person information includes:
➢ number of persons located in coming vehicle,
➢ and/or face recognition of driver of coming vehicle,
➢ and/or face recognition of all/any passengers of coming vehicle.

12. Security process according to any of preceding claims, wherein said collected mobile phone information includes:
➢ number of mobile phones located in coming vehicle,
➢ and/or make and/or type of mobile phones located in coming vehicle,
➢ and/or origin country of SIM cards and/or operator of SIM cards, of mobile phones located in coming vehicle,
➢ and/or SMS target numbers and/or SMS texts, of mobile phones located in coming vehicle, in vicinity of checkpoint,
➢ and/or target numbers of phone calls of mobile phones located in coming vehicle, in vicinity of checkpoint.

13. Security process according to any of preceding claims, wherein said risk situations of said catalog correspond to a mismatch:
➢ between said collected vehicle information and said collected person information,
➢ and/or between said collected vehicle information and said collected mobile phone information,
➢ and/or between said collected person information and said collected mobile phone information.

14. Security process according to any of preceding claims, wherein said mobile phone information collecting step (3) is performed via either local communication detection system located in checkpoint vicinity and/or global communication detection system.

15. Security tower implementing security process according to any of preceding claims, wherein it comprises:
➢ cameras (17) to perform said vehicle information collecting step (1) and said person information collecting step (2),
➢ a processor to perform said analysis phase (4, 5, 6, 7) and said result phase (8),
➢ an actuator to actuate a mechanical system which blocks or frees at least a vehicle circulation lane and which is driven by said processor based on said result phase (8).

16. Security tower according to claim 15, wherein it also comprises a local communication detection system to collect (3) said mobile phone information.

17. Security tower according to claim 15 or 16, wherein it comprises one or more additional light sources (18), preferably spotlights, directed towards coming vehicle, to enhance imaging quality of said cameras (17).

18. Security system implementing at least one tower according to any of claims 15 to 17, one said tower (10) for each vehicle circulation lane at checkpoint.

19. Security system implementing at least one tower according to any of claims 15 to 17, one said tower (10) for each pair of vehicle circulation lanes at checkpoint, vehicles circulating in the same direction on both lanes of said pair of vehicle circulation lanes.
